# EUROPÄISCHE PATENTSCHRIFT

(11) **EP 0 806 136 B1**
(45) Veröffentlichungstag und Bekanntmachung des Hinweises auf die Patenterteilung: **13.06.2001**
(21) Anmeldenummer: 97107405.9
(22) Anmeldetag: 05.05.1997
(51) Int. Cl.: A01K 5/02

(54) **Einrichtung zur Futterversorgung von Tieren**
Apparatus for regulating feeding of animals
Appareil pour réguler l'alimentation d'animaux

(30) Priorität: 05.05.1996 DE 19617784; 05.05.1996 DE 19617786
(43) Veröffentlichungstag der Anmeldung: 12.11.1997
(73) Patentinhaber: Icking, Paul, D-46325 Borken (DE)
(72) Erfinder: Icking, Paul, D-46325 Borken (DE)
(74) Vertreter: Busse & Busse Patentanwälte

(56) Entgegenhaltungen:
- EP-A- 0 469 192
- CA-A- 1 312 796
- DE-A- 2 509 954
- FR-A- 2 513 072
- US-A- 3 855 971
- US-A- 4 040 389
- US-A- 4 770 124

## Beschreibung

Die Erfindung betrifft eine Einrichtung zur Futterversorgung von Tieren an Einzel- und/oder Gruppenfreßplätzen in einer Ausgestaltung gemäß dem Oberbegriff des Anspruchs 1. Solch eine Einrichtung ist bekannt aus dem Dokument US-A-4 770 124.

Bei einer bekannten Einrichtung dieser Art (Dokument FR-A-2 513 072) sind die Futtervorratsbehälter jeweils mittels eines Hebels von Hand auf und ab verstellbar und auf der Staufläche absetz- und dadurch verschließbar. Eine solche Ausgestaltung erfordert einen hohen Stellaufwand, der mit entsprechenden Stellkräften einhergeht, da der gesamte Futtervorratsbehälter zu bewegen ist.

Die Erfindung befaßt sich mit dem Problem, eine Einrichtung der genannten Art zu schaffen, die bei geringem baulichen Aufwand eine einfache und zuverlässige Bedienung ermöglicht und für unterschiedliche Fütterungsarten einsetzbar ist.

Die Erfindung löst dieses Problem durch eine Einrichtung mit den Merkmalen des Anspruchs 1. Hinsichtlich wesentlicher weiterer Ausgestaltungen wird auf die Ansprüche 2 bis 23 verwiesen.

Das Vorsehen eines außenliegenden Verschlußschiebers und eines Stellantriebes für diesen ermöglicht es, zu vorgegebenen Fütterungszeiten Futter in beliebiger aber auch dosierter Menge zum Verzehr für die Tiere freizugeben, wobei lediglich ein geringer Kraftaufwand für die Betätigung des Verschlußschiebers erforderlich ist, der mit einfachen Antriebsmitteln erbracht werden kann. Dabei ist die Einrichtung einfach steuerbar und in der Lage, eine ad libitum-Fütterung ebenso zu verwirklichen wie eine Dribbelfütterung.

Zu Dosierungszwecken kann der Verschlußschieber während eines Fütterungszeitraumes wiederholt geöffnet und geschlossen werden, wobei jeweils durch Schließen des Verschlußschiebers eine bei dessen Öffnen ausgetretene Futtermenge abgeteilt wird und zur Futteraufnahme freiliegt. Die je Öffnungsvorgang austretende und beim Schließen des Verschlußschiebers abteilbare Futtermenge hängt dabei von der konstruktiv bedingten freigebbaren Öffnungsgröße ab, die durch Einstellung des Hubweges des Verschlußschiebers begrenzbar ist. Mitbestimmend ist ferner die Zahl der zurückgelegten Hübe während eines Fütterungszeitraumes. Bei der Dribbelfütterung mit einem als Verdränger wirksamen Verschlußschieber werden stets nur kleine Mengen abgeteilt und zum Fressen freigegeben, wobei sich dieser Vorgang während eines Fütterungszeitraumes üblicherweise vielfach wiederholt. Bei entsprechender Steuerung der Einrichtung, die üblicherweise eine Mehrzahl von Futtervorratsbehältern umfaßt, die oberseitig mitttels eines Futterförderers mit Futter beschickbar sind, kann sichergestellt werden, daß allen Tieren, auch innerhalb einer Gruppe, das vorgesehene Futter zeitgleich, kontinuierlich und/oder mengenangepaßt vorgelegt werden kann, so daß die Tiere während der Aufzucht bzw. Mast optimal versorgbar sind. Da bei abgeschlossenem Futtervorratsbehälter eine weitere Freigabe von Futter verhindert ist, kann sichergestellt werden, daß die Tröge in den Zwangspausen zwischen einer Futterfreigabe von den Tieren vollständig geleert werden, so daß den Tieren stets frisches Futter aus Trögen dargeboten wird, was aus hygienischen Gründen zur Gesundheitsvorsorge erwünscht ist.

Weitere Einzelheiten und Vorteile ergeben sich aus der nachfolgenden Beschreibung und der Zeichnung, in der mehrere Ausführungsbeispiele des Gegenstandes der Erfindung näher veranschaulicht sind. Im einzelnen zeigen:
- Fig. 1: eine Einrichtung nach der Erfindung in Seitenansicht in einem zur Versorgung von zwei Tiergruppen veranschaulichenden Ausschnitt,
- Fig. 2: eine Draufsicht auf den unteren Teil eines Futtervorratsbehälters mit darunter befindlichem Rundtrog,
- Fig. 3: eine vergrößerte Darstellung eines Futtervorratsbehälters im Aufriß,
- Fig. 4: eine Seitenansicht, teilweise im Schnitt, ähnlich Fig. 1 zur Veranschaulichung einer zweiten Ausführung der Einrichtung nach der Erfindung,
- Fig. 5: einen einzelnen Futtervorratsbehälter zur Veranschaulichung des als Verdränger ausgebildeten Verschlußschiebers im Schnitt,
- Fig. 6: eine vereinfachte Draufsicht zu Fig. 5,
- Fig. 7: vereinfachte Draufsichten ähnlich Fig. 6 zur Veranschaulichung unterschiedlicher Aufteilungen des Trogbereiches in Freßplätze,
- Fig. 8: eine Seitenansicht einer Einrichtung nach der Erfindung in einer dritten Ausführung für die Versorgung von zwei Tieren in Reihenaufstallung,
- Fig. 9: eine Seitenansicht der Einrichtung nach Fig. 8 in einer Blickrichtung unter rechtem Winkel zu der nach Fig. 8 bei abgesenktem Verschlußschieber,
- Fig. 10: eine Darstellung der Einrichtung entsprechend Fig. 9 bei angehobenem Verschlußschieber,
- Fig. 11: eine Darstellung einer vierten Ausführung einer Einrichtung nach der Erfindung für eine Einzelplatzversorgung, und
- Fig. 12: eine Ansicht der Einrichtung nach Fig. 11 in einer Blickrichtung unter rechtem Winkel zu der nach Fig. 11.

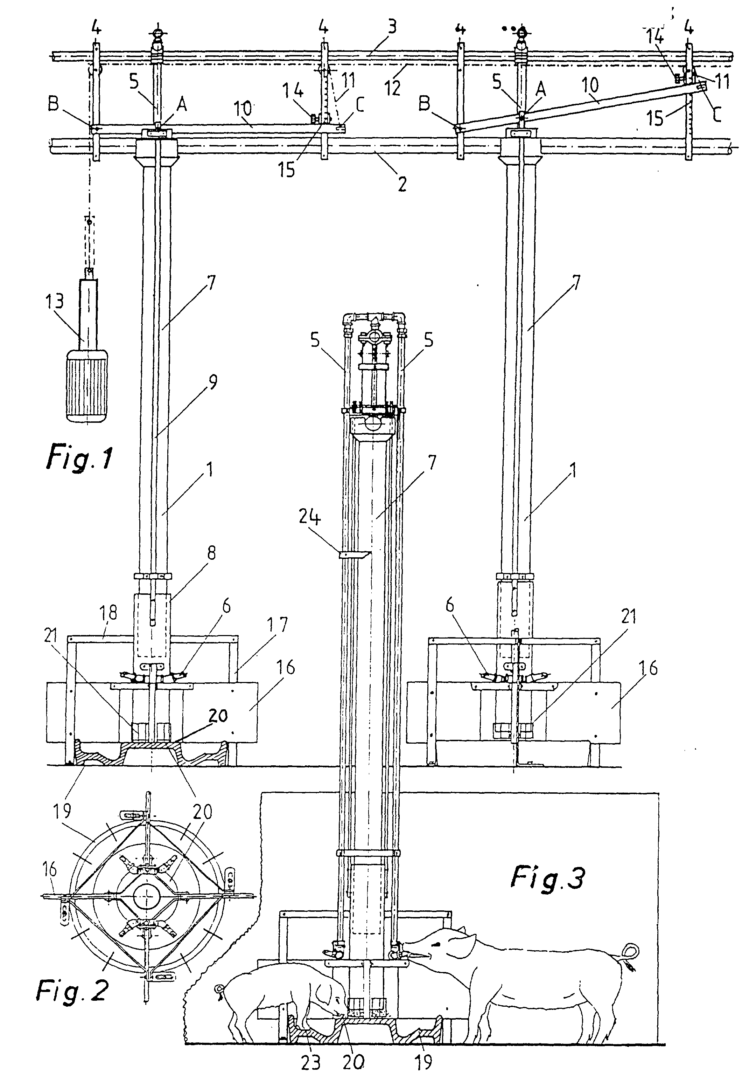

Die beiden Versorgungseinrichtungen 1 in der Fig. 1 sind an eine Futterbeschickungsanlage 2 und eine Wasserleitung 3 angeschlossen, die ihrerseits mit Hilfe von Distanzhaltern 4 zu einem freitragenden Bauelement verschraubt sind und überwiegend nur von den Stichleitungen 5, die zu den Direkttränkezapfen 6 führen, abgestützt sind.

Ein Futtervorratsbehälter 7, der rohr- oder schachtförmig ausgebildet ist und runden oder eckigen Querschnitt haben kann, hängt jeweils an der Futterbeschickungsanlage 2 und ragt unten in einen durchmessergrößeren, hier ebenfalls rohrförmigen Verschlußschieber 8, der über das Zuggestänge 9 im Punkt A mit einem Hebel 10 verbunden ist, der seinerseits im Punkt B gelagert und am entgegengesetzten Ende im Punkt C über ein elastisches Einzelseil 11 mit einem Hauptseil 12 gekoppelt ist, das gerade von einem zentralen Stellantrieb 13 in AUF-Position gezogen worden ist.

Ein verstellbarer Anschlag 14 zeigt auf einer Skala 15 für den linken Futtervorratsbehälter 7 in Fig. 1 die Null-Position und für den rechten Futtervorratsbehälter 7 die Maximum-Position an.

Die Freßplatzteiler 16 an den Bodenstativen 17, die über die Streben 18 verbunden sind, geben der Versorgungseinrichtung 1 die notwendige Standfestigkeit.

Jeder Futtervorratsbehälter 7 hängt über einem Rundtrog 19, der in seinem Zentrum eine erhöhte Staufläche 20 aufweist, die dem Futtervorratsbehälter 7 gegenüberliegt und zusammen mit dem Verschlußschieber 8, der einen Gitterring 21 trägt, den Futtervorratsbehälter abschließt, wenn sich der Verschlußschieber 8 in Schließstellung befindet.

In Fig. 2 erkennt man in der Draufsicht einen Rundtrog 19, der viele Freßplätze zwischen den Freßplatzteilern 16 in gleicher Entfernung zur zentralen Staufläche 20 bietet.

In Fig. 3 sieht man links ein kleines Ferkel, das sich mit den Vorderfüßen auf die erhöhte Stufe 23 im Trog 19 stellen kann, um an das Futter 22 auf der erhöhten Staufläche 20 zu gelangen. Ein rechts dargestelltes Läuferschwein hingegen ist groß genug, um von seinem Standort vor dem Trog 19 noch an einem der Direkttränkezapfen 6 seinen Durst löschen zu können.

Ein Stellzeiger 24 ist verschiebbar auf der Stichleitung 5 plaziert, wo er im oberen Bereich des durchsichtigen Futtervorratsbehälters 7 an beliebiger Stelle den Füllstand des Futters für Kontroll- oder Prüfzwecke markieren soll.

Der Verschlußschieber 8 kann als dünnes Rohr ausgebildet sein, das dementsprechend einen schmalen Rand als Unterkante darbietet und sich bei Abwärtsbewegung durch das als Schüttkegel beim Öffnen des Verschlußschiebers ausgetretene Futter bis herab zur Staufläche 20 hindurchbewegen kann.

Die Schließbewegung erfolgt vorzugsweise durch Schwerkraft nach entsprechender Freigabe des Hauptseils 12 durch den Stellantrieb 13. Grundsätzlich kann jedoch auch für jeden Futtervorratsbehälter 7 ein gesonderter Stellantrieb vorgesehen sein, z.B. ein elektromotorischer, elektromagnetischer, hydraulischer oder pneumatischer Antrieb, der den Verschlußschieber 8 auch in beiden Richtungen betätigen kann und eine Hubwegeinstellung erlaubt.

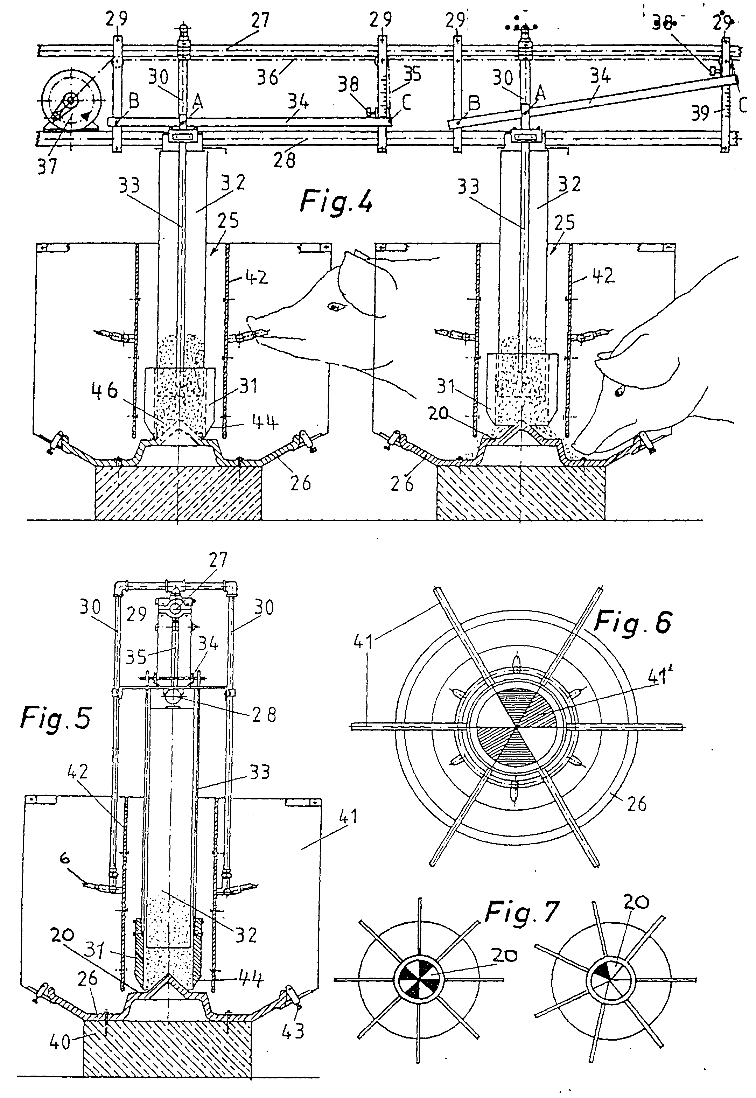

Bei der Ausführung nach Fig. 4 werden die Versorgungseinrichtungen 25 mit Rundtrog 26 über die Wasserleitung 27 und Futterleitung 28 beschickt, die mit Hilfe von Distanzhaltern 29 in bestimmtem Abstand parallel zu einem freitragenden Bauelement verschraubt sind und überwiegend nur von den beiden Stichleitungen 30 abgestützt werden.

Ein Verschlußschieber 31 umgibt unten rundum den rohrförmigen Futtervorratsbehälter 32 und ist über das Zuggestänge 33 im Punkt A mit dem Hebel 34 verbunden, der seinerseits im Punkt B gelagert und am entgegengesetzten Ende im Punkt C über ein elastisches Einzelseil 35 mit einem Hauptseil 36 verbunden ist, das gerade von einem Kurbel-Stellantrieb 37 in größte Hubstellung gezogen ist.

Ein verstellbarer Anschlag 38 an einem Distanzhalter 29 nahe dem Punkt C steht in Fig. 4 für den linken Futtervorratsbehälter 32 auf Minimum, so daß kein Futter 6 austreten kann.

Beim Futtervorratsbehälter rechts in Fig. 4 hingegen ist der Anschlag 38 auf Maximum eingestellt, was auf der Skala 39 gut ablesbar ist, weil diese im Verhältnis der Hebelarme (B-C) zu (A-B) den tatsächlichen Hubweg am Verschlußschieber 31 vergrößert anzeigt.

Die Fig. 5 zeigt bei Erhöhung des Rundtroges 26 die Einsparung durch Materialeinkürzung um etwa die Höhe des Betonsockels 40 zum Beispiel an den Bauteilen wie Freßplatzteiler 41, Zentralschutzrohr 42, Zuggestänge 33 und Futtervorratsbehälter 32.

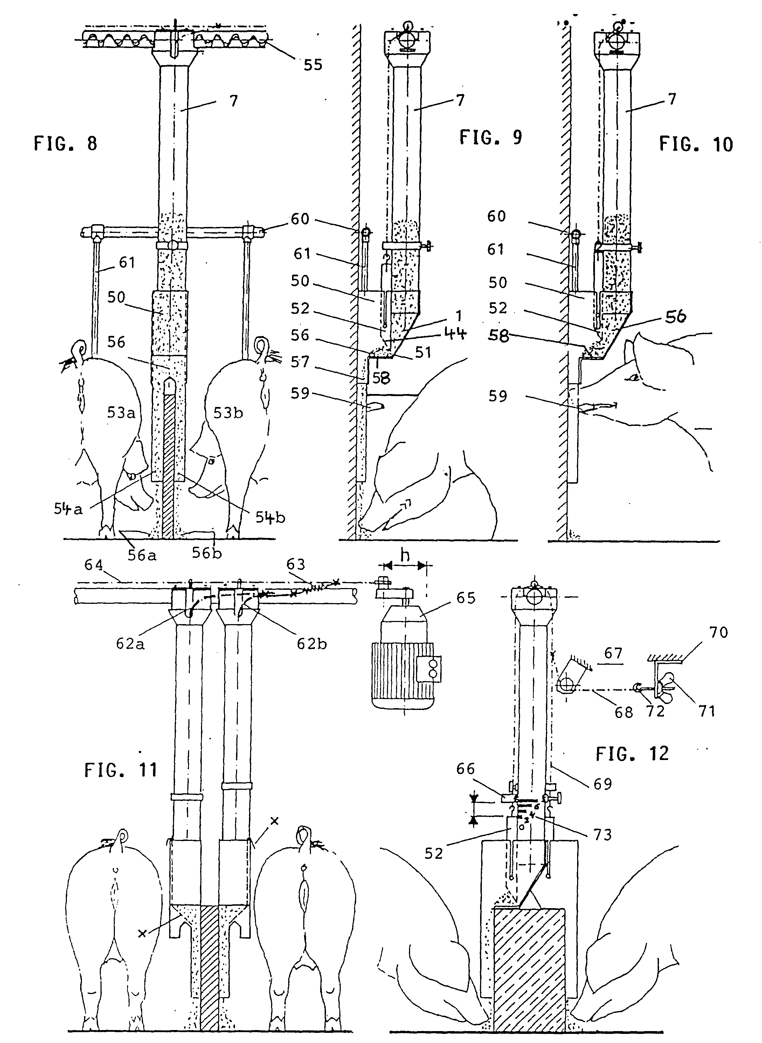

Der Rundtrog 26 weist an der äußeren Unterseite Vertiefungen für mögliche Freßplatzaufteilungen zum Beispiel 6 x 60° (Fig. 6), 7 x 51,42° und 8 x 45° (Fig. 7), 9 x 40° und 10 x 36° auf, wo die Freßplatzteiler 41 mit ihren Verschraubungen 43 fixiert werden können.

Die Kennzeichnung der einzelnen Segmente 41' soll verdeutlichen, daß die gleichmäßige Aufteilung des Rundtroges 26 durch die Freßplatzteiler 41 allein bereits ausreicht, die Gleichbehandlung aller Tiere in der Futterversorgung zu gewährleisten.

Bei der Ausführung nach Fig. 4 bis 7 ist der Verschlußschieber 31 als Verdrängerkörper ausgebildet, der bei seiner Abwärtsbewegung auf unter ihm befindliches Futter eine nach außengerichtete Verdrängerwirkung ausübt. Hierzu besitzt er unterseitig eine Schneidkante und eine sich von dieser schräg nach oben außen erstreckende Verdrängerfläche 44. Bevorzugt weist dabei der untere Randbereich des Verschlußschiebers 31 die Form eines Stechbeitels auf.

Wie Fig. 8 verdeutlicht, besteht bei dieser weiteren Ausführung die Versorgungseinrichtung 1 wiederum im wesentlichen aus dem rohrförmigen Futtervorratsbehälter 7, auf dem jedoch im unteren Bereich ein versetztes Übergangsstück 50 angebracht ist, das eine ebene seitliche Futteraustrittsöffnung 51 darbietet, die mittels eines Flachschiebers 52 als Verschlußglied verschließbar ist. Unter der Futteraustrittsöffnung 51 befindet sich eine Staufläche 58, auf der sich austretendes Futter 56 auflegen kann.

Fig. 8 zeigt eine Versorgungseinrichtung 1 bei der Ausgabe des Futters an zwei in Reihe stehende Tiere 53a und 53b. Eine symmetrische Aufteilung des Übergangsstückes 50 in zwei Futterleitrohre 54a und 54b gewährleistet die Gleichheit der beiden Futterportionen 56a und 56b. Über einen Spiralförderer 55 wird hier der Futtervorratsbehälter 2 wieder aufgefüllt.

Fig. 9 veranschaulicht, daß bei der Abwärtsbewegung des Verschlußschiebers 52 eine Verdrängung von Futter 56 in den Abwurfschacht 57 erfolgt, da der Verschlußschieber 52 eine äußere, hier ebene Verdrängerschrägfläche 44 aufweist.

In Fig. 10 wird der Verschlußschieber 52 nach oben bewegt, wobei kein Futter in den Abwurfschacht 57 fällt. Ein Tier 53b trinkt gerade an einem Direkttränkezapfen 59, der durch eine Hauptleitung 60 und eine abzweigende Stichleitung 61 das Trinkwasser erhält.

Gemäß Fig. 11 ist ein Einzelseil 62a an ein Einzelseil 62b angeschlossen, dessen Ende über eine Zugfeder 63 mit dem Hauptseil 64, das zu einem Kurbel-Stellantrieb 65 führt, verbunden ist.

Durch einen verstellbaren Anschlag 66 kann der Verschlußschieber 52 nur den kleineren Hub a gegenüber dem Kurbelhub h ausführen. DieHubdifferenz (h-a) wird durch die Elastizität der Zugfeder 63 ausgeglichen.

In Fig. 12 führt bei der Fernbedienung 67 ein Zugseil 68 von einem Einzelseil 69 zu einem entfernteren Einstellort 70, wo über eine Stellschraube 71 der Haltepunkt 72 verstellt wird. Beim Füttern kann mit Hilfe der Skala 73 die Dosierung optisch kontrolliert werden.

## Patentansprüche

1. Einrichtung zur Futterversorgung von Tieren an Einzel- oder Gruppenfreßplätzen, mit einem rohr- oder schachtförmigen Futtervorratsbehälter (7;32) je Einzel- oder Gruppenfreßplatz, dessen unteres Ende im Abstand oberhalb einer Staufläche (20;58) gelegen und verschließbar ist, **dadurch gekennzeichnet,** daß als Verschlußglied ein dem unteren Endteil des Futtervorratsbehälters (7;32) außenseitig zugeordneter Verschlußschieber (8;31;52) vorgesehen ist, der mittels eines Stellantriebs (13;37;65) zwischen einer abgesenkten Verschlußstellung und einer angehobenen Offenstellung bewegbar ist.

2. Einrichtung nach Anspruch 1, **dadurch gekennzeichnet,** daß der Verschlußschieber (8;31) als dem Querschnitt des Futtervorratsbehälters (7,32) angepaßter Rohrschieber ausgebildet ist.

3. Einrichtung nach Anspruch 1, **dadurch gekennzeichnet,** daß der Verschlußschieber (52) als Flachschieber ausgebildet und einer seitlichen Futteraustrittsöffnung (51) in einem auf dem unteren Ende des Futtervorratsbehälters (7) angebrachten Übergangsstück (50) zugeordnet ist.

4. Einrichtung nach einem der Ansprüche 1 bis 3, **dadurch gekennzeichnet,** daß der Verschlußschieber (31;52) einen unteren Randbereich aufweist, der bei einer Abwärtsbewegung auf unter dem Verschlußschieber gelegenes Futter eine nach außen gerichtete Verdrängerwirkung ausübt.

5. Einrichtung nach Anspruch 4, **dadurch gekennzeichnet,** daß der Verschlußschieber (31;52) unterseitig eine Schneidkante und eine von dieser schräg nach außen oben verlaufende Verdrängerfläche (44) aufweist.

6. Einrichtung nach Anspruch 4 oder 5, **dadurch gekennzeichnet,** daß der untere Rand des Verschlußschiebers (31;52) die Form eines Stechbeitels aufweist.

7. Einrichtung nach einem der Ansprüche 1 bis 6, **dadurch gekennzeichnet,** daß die Bewegungsrichtung des Verschlußschiebers (8;31;52) vertikal verläuft.

8. Einrichtung nach einem der Ansprüche 1 bis 7, **dadurch gekennzeichnet,** daß der Hubweg des Verschlußschiebers (8;31;52) einstellbar ist.

9. Einrichtung nach einem der Ansprüche 1 bis 8, **dadurch gekennzeichnet,** daß der Hubweg des Verschlußschiebers (8;31;52) auch bei maximaler Einstellung kleiner ist als die Höhe der vom Verschlußschieber zu versperrenden Futterauslaßöffnung.

10. Einrichtung nach einem der Ansprüche 1 bis 9, **dadurch gekennzeichnet,** daß der Verschlußschieber (8;31;52) aus einer durch den Stellantrieb (13;37;65) herbeigeführten Offenstellung durch Schwerkraft in seine Verschlußstellung zurückbewegbar ist.

11. Einrichtung nach einem der Ansprüche 1 bis 10, **dadurch gekennzeichnet,** daß jedem Verschlußschieber (8;31;52) ein unabhängig betätigbarer Stellantrieb zugeordnet ist.

12. Einrichtung nach einem der Ansprüche 1 bis 10, **dadurch gekennzeichnet,** daß einer Mehrzahl von Verschlußschiebern (8;31;52) ein gemeinsamer Stellantrieb (13;37;65) zugeordnet ist, dessen Antriebsbewegung jeweils durch Antriebsübertragungsglieder (9,10,11,12;33,34,35,36;62,63,64) auf die Verschlußschieber (8;31,52) übertragbar ist.

13. Einrichtung nach Anspruch 12, **dadurch gekennzeichnet,** daß als Antriebsübertragsglieder Zugseile (11,12;35,36;62,64) vorgesehen sind,

14. Einrichtung nach Anspruch 12 oder 13, **dadurch gekennzeichnet,** daß den Antriebsübertragungsgliedern (9,10,11,12;33,34,35,36;62,63,64) Verstelleinrichtungen (14;38;71,72) zur individuellen oder gruppenweise gleichförmigen Einstellung des Hubweges der Verschlußschieber (8;31;52) zugeordnet sind.

15. Einrichtung nach Anspruch 13 oder 14, **dadurch gekennzeichnet,** daß die Zugseile (11,12;35,36;62,64) über Hebel (10;34) betätigbar sind und die Verstelleinrichtungen (14;38) den Schwenkweg der Hebel (10;34) begrenzen.

16. Einrichtung nach einem der Ansprüche 1 bis 15, **dadurch gekennzeichnet,** daß der Stellantrieb (13;37;65) bzw. die Stellantriebe den Verschlußschieber (8;31;42) bzw. die Verschlußschieber während eines Fütterungszeitraums in eine Daueroffenstellung überführt bzw. überführen.

17. Einrichtung nach einem der Ansprüche 1 bis 16, **dadurch gekennzeichnet,** daß der Stellantrieb (13;37;65) bzw. die Stellantriebe dem Verschlußschieber (8;31;42) bzw. den Verschlußschiebern während eines Fütterungszeitraumes eine Mehrzahl von Öffnungs- und Schließbewegungen erteilt bzw. erteilen.

18. Einrichtung nach Anspruch 16, **dadurch gekennzeichnet,** daß der Verschlußschieber (8;31;52) bzw. die Verschlußschieber ein Mittel zur dosierten Futterzuteilung bildet bzw. bilden, die sich nach den Hubwegen und den Hubzahlen bemißt.

19. Einrichtung nach einem der Ansprüche 1 bis 18, **dadurch gekennzeichnet,** daß der Verschlußschieber (8;31;52) außenseitig von einem feststehenden Schutzteil (42;50) abgeschirmt ist.

20. Einrichtung nach einem der Ansprüche 1 bis 19, **dadurch gekennzeichnet,** daß der Verschlußschieber (8;31;52) aus mehreren Teilen besteht, die jeweils eine Teilöffnung verschließen bzw. freigeben und unabhängig voneinander oder gemeinsam betätigbar sind.

21. Einrichtung nach einem der Ansprüche 1 bis 20, **dadurch gekennzeichnet,** daß die Staufläche (20) von einem erhöhten Zentralbereich eines Troges (19;26), insbesondere Rundtroges, gebildet ist.

22. Einrichtung nach Anspruch 21, **dadurch gekennzeichnet,** daß der Trog (19;26) im Muldenbereich zwischen der tiefsten Stelle und dem äußeren Rand eine im wesentlichen waagerechte Standfläche (23) für die Vorderfüße von Kleintieren (22) aufweist.

23. Einrichtung nach einem der Ansprüche 3 bis 20,**dadurch gekennzeichnet,** daß die Staufläche (58) Bestandteil des Übergangsstücks (50) bildet oder diesem nachgeordnet ist.

## Claims

1. An apparatus for supplying animal feed to individual or group feeding stations, with a tubular or shaft-like feed storage container (7; 32) for each individual or group feeding station and the bottom end of which is at a distance above a baffle surface (20; 58) and is closable, characterised in that the closure member provided is a sliding shutter (8; 31; 52) externally associated with the bottom end part of the feed storage container (7; 32) and which is adapted to be moved by a positioning drive (13; 37; 65) between a lowered closed position and a raised open position.

2. An apparatus according to claim 1, characterised in that the sliding shutter (8; 31) is constructed as a cylindrical slide valve adapted to the cross-section of the feed storage container (7; 32).

3. An apparatus according to claim 1, characterised in that the sliding shutter (52) is constructed as a flat slide valve and is associated with a lateral feed outlet orifice (51) in a transfer part (50) mounted at the bottom end of the feed storage container (7).

4. An apparatus according to one of claims 1 to 3, characterised in that the sliding shutter (31; 52) comprises a bottom marginal area which, upon a downwards movement, exerts an outwardly directed displacing action on feed which is present under the sliding shutter.

5. An apparatus according to claim 4, characterised in that the sliding shutter (31; 52) has a cutting edge on its under side, from which a displacing surface (44) extends obliquely outwards and upwards.

6. An apparatus according to claim 4 or 5, characterised in that the bottom edge of the sliding shutter (31; 52) is in the form of a cutting chisel.

7. An apparatus according to one of claims 1 to 6, characterised in that the sliding shutter (8; 31; 52) moves in a vertical direction.

8. An apparatus according to one of claims 1 to 7, characterised in that the distance which the sliding shutter (8; 31; 52) moves can be adjusted.

9. An apparatus according to one of claims 1 to 8, characterised in that even at the maximum setting the distance which the sliding shutter (8; 31; 52) moves is less than the height of the feed outlet orifice which is intended to be closed by the sliding shutter.

10. An apparatus according to one of claims 1 to 9, characterised in that the sliding shutter (8; 31; 52) is adapted to be moved out of the open position, into which it is moved by the positioning drive (13; 37; 65) and back into its closed position by force of gravity.

11. An apparatus according to one of claims 1 to 10, characterised in that a positioning drive which can be actuated independently is associated with each sliding shutter (8; 31; 52).

12. An apparatus according to one of claims 1 to 10, characterised in that a common positioning drive (13; 37; 65) is associated with a plurality of sliding shutters (8; 31; 52), its driving movement being transferable to the respective sliding shutters (8; 31; 52) by drive transfer means (9, 10, 11, 12; 33, 34, 35, 36, 37; 62, 63, 64).

13. An apparatus according to claim 12, characterised in that traction cords (11, 12; 35, 36; 62, 64) are provided as the drive transfer means.

14. An apparatus according to claim 12 or 13, characterised in that adjusting means (14; 38; 71, 72) for individual or groupwise uniform setting of the travel performed by the sliding shutters (8; 31; 52) are associated with the drive transfer means (9, 10, 11, 12; 33, 34, 35, 36; 62, 63, 64).

15. An apparatus according to claim 13 or 14, characterised in that the traction cords (11, 12; 35, 36; 62, 64) can be actuated by levers (10; 34) and in that the adjusting means (14; 38) limit the pivoting movement of the levers (10; 34).

16. An apparatus according to one of claims 1 to 15, characterised in that the positioning drive(s) (13; 37; 65) move(s) the sliding shutter(s) (8; 31; 42) into a permanently open position during the feeding period.

17. An apparatus according to one of claims 1 to 16, characterised in that the positioning drive(s) (13; 37; 65) impart(s) a plurality of opening and closing movements to the sliding shutter(s) (8; 31; 42) during one feeding period.

18. An apparatus according to claim 16, characterised in that the sliding shutter(s) (8; 31; 52) constitute(s) a means for the measured allocation of feed, measured according to the number and degree of lifts.

19. An apparatus according to one of claims 1 to 18, characterised in that the sliding shutter (8; 31; 52) is screened on the outside by a fixed guard (42; 50).

20. An apparatus according to one of claims 1 to 19, characterised in that the sliding shutter (8; 31; 52) consists of several parts adapted to be actuated jointly or independently of one another, each closing or opening a part of the orifice.

21. An apparatus according to one of claims 1 to 20, characterised in that the baffle surface (20) is constituted by a raised central area of a trough (19; 26), particularly a circular trough.

22. An apparatus according to claim 21, characterised in that the trough (19; 26) has in the tray area, between the lowest point and the outer edge, a substantially horizontal standing area (23) for the front feed of small animals (22).

23. An apparatus according to one of claims 3 to 20, characterised in that the baffle surface (58) forms a constituent part of or is positioned downstream of the transfer part (50).

## Revendications

1. Appareil pour réguler l'alimentation d'animaux dans des emplacements d'alimentation individuels ou regroupés, avec un réservoir de stockage d'aliment en forme de tube ou de puits (7; 32) par emplacement d'alimentation individuel ou regroupé, dont l'extrémité inférieure est située à distance au-dessus d'une surface d'accumulation (20; 58) et peut être fermée, caractérisé en ce qu'il est prévu comme élément de fermeture un coulisseau de fermeture (8; 31; 52) affecté extérieurement à la partie d'extrémité inférieure du réservoir de stockage d'aliment (7; 32), ledit coulisseau pouvant être déplacé au moyen d'un vérin (13; 37; 65) entre une position de fermeture abaissée et une position d'ouverture relevée.

2. Appareil selon la revendication 1, caractérisé en ce que le coulisseau de fermeture (8; 31) se présente sous la forme d'un coulisseau tubulaire adapté à la section transversale du réservoir de stockage d'aliment (7, 32).

3. Appareil selon la revendication 1, caractérisé en ce que le coulisseau de fermeture (52) se présente sous la forme d'un coulisseau plat et est affecté à une ouverture de sortie d'aliment latérale (51) dans une pièce de transition (50) montée à l'extrémité inférieure du réservoir de stockage d'aliment (7).

4. Appareil selon l'une quelconque des revendications 1 à 3, caractérisé en ce que le coulisseau de fermeture (31; 52) présente une zone de bord inférieure qui exerce sur l'alimentation située en dessous du coulisseau de fermeture un effet de déplacement dirigé vers l'extérieur lors d'un déplacement vers le bas.

5. Appareil selon la revendication 4, caractérisé en ce que le coulisseau de fermeture (31; 52) présente dans sa partie inférieure une arête coupante et une surface de refoulement (44) s'étendant de celle-ci en oblique vers l'extérieur et le haut.

6. Appareil selon la revendication 4 ou 5, caractérisé en ce que le bord inférieur du coulisseau de fermeture (31; 52) présente la forme d'un ciseau.

7. Appareil selon l'une quelconque des revendications 1 à 6, caractérisé en ce que la direction de déplacement du coulisseau de fermeture (8; 31; 52) s'étend verticalement.

8. Appareil selon ' l'une quelconque des revendications 1 à 7, caractérisé en ce que la course ascendante du coulisseau de fermeture (8; 31; 52) est réglable.

9. Appareil selon l'une quelconque des revendications 1 à 8, caractérisé en ce que la course ascendante du coulisseau de fermeture (8; 31; 52) est, même à réglage maximal, plus petite que la hauteur de l'ouverture de sortie d'aliment à bloquer par le coulisseau de fermeture.

10. Appareil selon l'une quelconque des revendications 1 à 9, caractérisé en ce que le coulisseau de fermeture (8; 31; 52) peut être re-déplacé d'une position d'ouverture provoquée par le vérin (13; 37; 65) dans sa position de fermeture par l'action de la pesanteur.

11. Appareil selon l'une quelconque des revendications 1 à 10, caractérisé en ce qu'un vérin à commande indépendante est affecté à chaque coulisseau de fermeture (8; 31; 52).

12. Appareil selon l'une quelconque des revendications 1 à 10, caractérisé en ce qu'à une pluralité de coulisseaux de fermeture (8; 31; 52) est affecté un vérin commun (13; 37; 65), dont le mouvement d'entraînement peut être transmis aux coulisseaux de fermeture (8; 31; 52) respectivement par des éléments de transmission d'entraînement (9, 10, 11, 12; 33, 34, 35, 36; 62, 63, 64).

13. Appareil selon la revendication 12, caractérisé en ce qu'il est prévu comme éléments de transmission d'entraînement des câbles de traction (11, 12; 35, 36; 62, 64).

14. Appareil selon la revendication 12 ou 13, caractérisé en ce qu'aux éléments de transmission d'entraînement (9, 10, 11, 12; 33, 34, 35, 36; 62, 63, 64) sont affectés des dispositifs de réglage (14; 38; 71, 72) pour le réglage uniforme individuel ou regroupé de la course ascendante des coulisseaux de fermeture (8; 31; 52).

15. Appareil selon la revendication 13 ou 14, caractérisé en ce que les câbles de traction (11, 12; 35, 36; 62, 64) peuvent être commandés via des leviers (10; 34) et les dispositifs de réglage (14; 38) limitent la course pivotante des leviers (10; 34).

16. Appareil selon l'une quelconque des revendications 1 à 15, caractérisé en ce que le vérin (13; 37; 65) ou selon le cas les vérins transfèrent le coulisseau de fermeture (8; 31; 52) ou selon le cas les coulisseaux de fermeture au cours d'un intervalle d'alimentation dans une position d'ouverture permanente.

17. Appareil selon l'une quelconque des revendications 1 à 16, caractérisé en ce que le vérin (13; 37; 65) ou selon le cas les vérins communiquent au coulisseau de fermeture (8; 31; 52) ou selon le cas aux coulisseaux de fermeture au cours d'un intervalle d'alimentation une pluralité de déplacements d'ouverture et de fermeture.

18. Appareil selon la revendication 16, caractérisé en ce que le coulisseau de fermeture (8; 31; 52) ou selon le cas les coulisseaux de fermeture constituent un moyen de répartition dosée de l'alimentation, qui est dimensionné en fonction des courses ascendantes et des nombres de courses.

19. Appareil selon l'une quelconque des revendications 1 à 18, caractérisé en ce que le coulisseau de fermeture (8; 31; 52) est protégé extérieurement par une pièce de protection fixe (42; 50).

20. Appareil selon l'une quelconque des revendications 1 à 19, caractérisé en ce que le coulisseau de fermeture (8; 31; 52) est constitué de plusieurs parties, qui ferment ou libèrent respectivement une ouverture partielle et peuvent être commandés indépendamment l'un de l'autre ou conjointement.

21. Appareil selon l'une quelconque des revendications 1 à 20, caractérisé en ce que la surface d'accumulation (20) est formée par une zone centrale surélevée d'une auge (19; 26), en particulier d'une auge ronde.

22. Appareil selon la revendication 21, caractérisé en ce que l'auge (19; 26) présente dans la zone creuse comprise entre la position la plus profonde et le bord extérieur une surface d'appui sensiblement horizontale (23) pour les pattes avant de petits animaux (22).

23. Appareil selon l'une quelconque des revendications 3 à 20, caractérisé en ce que la surface d'accumulation (58) fait partie de la pièce de transition (50) ou est agencée sur celle-ci par la suite.
